# FASCICULE DE BREVET EUROPEEN

(11) **EP 0 595 691 B1**
(45) Date de publication et mention de la délivrance du brevet: **02.09.1998**
(21) Numéro de dépôt: 93402591.7
(22) Date de dépôt: 22.10.1993
(51) Int. Cl.: B61H 13/38, B61H 5/00, F16D 65/12, F16D 65/847

(54) **Système de freinage pour véhicule ferroviaire utilisant des matériaux à base de carbone**
Bremsvorrichtung für Schienenfahrzeuge unter Verwendung von Kohlenstoff enthaltendem Material
Brake system for railway vehicle utilizing carbon based materials

(30) Priorité: 26.10.1992 FR 9212720
(43) Date de publication de la demande: 04.05.1994
(73) Titulaire: GEC ALSTHOM TRANSPORT SA, 75016 Paris (FR)
(72) Inventeur: Gaudefroy, Louis-Marc, F-78110 Le Vésinet (FR); Van Hemelryck, Alain, F-93140 Bondy (FR)
(74) Mandataire: Fournier, Michel

(56) Documents cités:
- EP-A- 0 170 298
- EP-A- 0 219 938
- EP-A- 0 236 658
- EP-A- 0 478 943
- FR-A- 2 140 710

## Description

L'invention concerne un système de freinage pour véhicule ferroviaire utilisant des matériaux à base de carbone pour réaliser les disques et les garnitures de frein.

Un système de freinage ferroviaire classique comprend une conduite pneumatique appelée conduite générale qui court le long du train. Son niveau de pression d'air comprimé détermine le niveau de consigne de freinage (ou de défreinage). Pour des raisons de sécurité, lorsque la conduite générale est à l'atmosphère la consigne de freinage est maximale. Réciproquement, lorsque la pression est nominale dans la conduite générale, il n'y a pas de demande de freinage. La consigne de freinage est donc donnée par le niveau de pression dans la conduite générale et transformée par un distributeur en une valeur de pression (ou de dépression) pour piloter un relais de débit dont la fonction est de remplir (ou de vidanger) les cylindres de frein à partir de la pression accumulée dans une réserve d'air comprimé appelée réservoir auxiliaire. Entre le relais de débit et le cylindre de frein se trouve en général une électrovalve dite relais d'échappement d'anti-enrayage qui est pilotée par un circuit électronique dont la fonction est de contrôler le glissement des essieux et d'empêcher les blocages en forçant les cylindres de frein à se vidanger à l'atmosphère.

Les cylindres de frein comportent en général des régleurs de jeu pour compenser les usures liées au frottement. Ils sont intégrés en principe dans les bogies et actionnent une timonerie mécanique qui amplifie l'effort d'application des garnitures de frottement sur les organes dissipateurs d'énergie qui sont les roues et/ou les disques. Ce circuit pneumatique d'alimentation des cylindres de frein sur bogie est relié au circuit en caisse par une conduite flexible.

Suivant la complexité des systèmes utilisés classiquement, les relais peuvent être à rapports amplificateurs de pression ou non et peuvent prendre en compte une information extérieure pour moduler la pression au cylindre de frein en fonction de cette information.

Le freinage des trains par l'intermédiaire de disques et de garnitures en matériau à base de carbone fait acutellement l'objet de nombreuses recherches. Ce type de freinage est déjà utilisé dans l'aviation et sur les voitures de Formule 1. Son principal avantage réside dans sa capacité à absorber des énergies très importantes. On pense pouvoir l'utiliser avantageusement pour le freinage des trains à grande vitesse dont les systèmes de freinage actuels sont proches de leurs limites. Il permettrait également d'augmenter les débits d'exploitation urbaine et suburbaine (rames de métro, de banlieue, automotrices, etc.). En outre, sa faible densité permettrait une réduction sensible des masses non suspendues.

L'adaptation de ce système de freinage sur les véhicules ferroviaires n'est cependant pas une chose aisée ainsi qu'il ressort de l'article de Jacques RAISON intitulé "Les matériaux de freinage", paru dans la Revue Générale des Chemins de Fer, juillet-août 1991. En effet, ces matériaux à base de carbone travaillent normalement à des températures élevées (de l'ordre de 1000°C) qui, par proximité et conduction thermique, sont la cause de températures élevées dans les parties avoisinantes sensibles à la chaleur (par exemple les roulements). Un autre inconvénient résulte de la grande variation du coefficient de frottement de ces matériaux en fonction de la vitesse, de la pression spécifique et en présence d'humidité. Ce phénomène n'est pas très gênant en aviation ou en Formule 1, le pilote de l'avion ou de la voiture modulant son effort sur les freins en fonction de ce qu'il ressent. Il n'en va pas de même dans le domaine ferroviaire où le conducteur du train ne ressent pas directement les conséquences de l'effort de freinage.

L'application au domaine ferroviaire du freinage par disques et garnitures en carbone (ou en matériau à base de carbone) passe donc par une solution à ces problèmes.

Le système de freinage selon la présente invention comporte des ensembles de freinage montés sur essieux et ayant un agencement particulier permettant aux disques et aux garnitures de freinage de travailler à température élevée sans risque de nuisance sur d'autres éléments et permettant un freinage efficace et sûr malgré la dispersion du coefficient de frottement.

Le document EP-A-0 478 943 porte sur un système de freinage pour véhicule ferroviaire monté sur un essieu du véhicule présentant les caractéristiques techniques définies dans le préambule de la revendication 1 ci-dessous.

Les documents EP-A-0 503 723 et EP-A-0 503 724 de l'état de la technique portent sur un bloc de freinage à semelle, ou à sabot, agissant directement sur une roue du véhicule.

Le bloc de freinage décrit dans ces documents est directement fixé sur le châssis de bogie.

Les mouvements relatifs du châssis de bogie par rapport à la roue sont directement transmis aux surfaces de frottement.

La reprise des efforts de freinage se fait par une bielle soumise aux accélérations verticales entre le châssis de bogie et l'essieu.

L'invention a donc pour objet un système de freinage pour véhicule ferroviaire monté sur un essieu dudit véhicule, ledit ensemble comportant un disque de frottement et des garnitures, le disque de frottement étant calé sur l'essieu, les garnitures étant disposées sur des stators logés dans des éléments encadrant le disque, lesdits éléments étant soutenus par ledit véhicule ou ledit bogie correspondant à l'essieu, les stators des garnitures étant actionnés par des actionneurs, au moins ledit disque de frottement étant réalisé en matériau composite à base de carbone, caractérisé en ce que:
- lesdits éléments sont soutenus par ledit véhicule ou ledit bogie par l'intermédiaire d'un organe d'articulation autorisant une première liberté en rotation pour accepter les jeux et les gauches de voie entraînant une inclinaison de l'essieu et une seconde liberté dans le sens transversal,
- un organe de rappel relie lesdits éléments audit véhicule ou audit bogie.

Le disque de frottement peut être rendu solidaire de l'essieu par des moyens de fixation facilitant son démontage. L'avantage de ceci est de rendre aisé le remplacement des disques usés.

Ces moyens de fixation peuvent comprendre un moyeu calé sur l'essieu et recevant le disque de frottement, lequel peut être formé d'une ou de plusieurs parties.

Le système de freinage peut comporter des moyens de prévention de la propagation vers l'essieu de l'énergie thermique engendrée dans le disque de frottement lors du freinage.

Ces moyens de prévention peuvent comporter l'interposition d'un isolant thermique ou une couche d'air entre le disque de frottement et l'essieu.

Les éléments encadrant le disque de frottement forment de préférence un carter de protection. Cette protection vis-à-vis de l'environnement peut être complétée par un élément ajouré permettant la circulation de l'air autour du disque de frottement.

Pour assurer une meilleure efficacité, il est préférable de disposer les actionneurs en couronne dans les éléments encadrant le disque de frottement.

Ces actionneurs peuvent être répartis en plusieurs groupes pouvant être commandés séparément.

La reprise de l'effort de freinage peut être assurée par une bielle articulée reliant le véhicule ou le bogie à l'ensemble de freinage, ou encore par un capteur d'effort délivrant un signal représentatif de l'effort de freinage.

Le système de freinage comprenant un circuit pneumatique de commande de freinage, il est prévu un transducteur transformant la pression pneumatique du circuit de commande de freinage en pression hydraulique pour assurer le fonctionnement des actionneurs.

L'articulation soutenant l'ensemble de freinage peut être disposée à l'extrémité d'un bras de suspension solidaire du véhicule ou du bogie.

Le système de freinage peut comporter un organe de ventilation soufflant à l'intérieur de l'ensemble de freinage. Le bras de suspension peut alors faire office de conduit de ventilation entre l'organe de ventilation et l'ensemble de freinage.

L'invention sera mieux comprise et d'autres avantages et particularités apparaîtront à la lecture de la description qui va suivre, donnée à titre non limitatif, accompagnée des dessins annexés parmi lesquels :
- la figure 1 montre l'extrémité d'un bogie de véhicule ferroviaire équipé d'un ensemble de freinage selon l'invention,
- la figure 2 est une vue en coupe d'un tel ensemble de freinage,
- les figures 3 et 4 illustrent une première variante de réalisation et d'installation d'un disque de frottement pour un ensemble de freinage selon l'invention,
- les figures 5 à 7A illustrent une seconde variante de réalisation et d'installation d'un disque de frottement pour un ensemble de freinage selon l'invention,
- les figures 8 à 11 illustrent une troisième variante de réalisation et d'installation d'un disque de frottement pour un ensemble de freinage selon l'invention,
- les figures 12 à 14 sont illustratives d'une première variante d'articulation de l'ensemble de freinage selon l'invention sur son bras de suspension,
- les figures 15 à 17 sont illustratives d'une seconde variante d'articulation de l'ensemble de freinage selon l'invention sur son bras de suspension,
- les figures 18 et 19 illustrent le refroidissement par ventilation d'ensembles de freinage selon l'invention,
- la figure 20 est une représentation schématique du circuit de freinage au niveau d'un bogie.

A titre d'exemple, la description portera sur un ensemble de freinage monté sur un essieu de bogie et soutenu par le bogie.

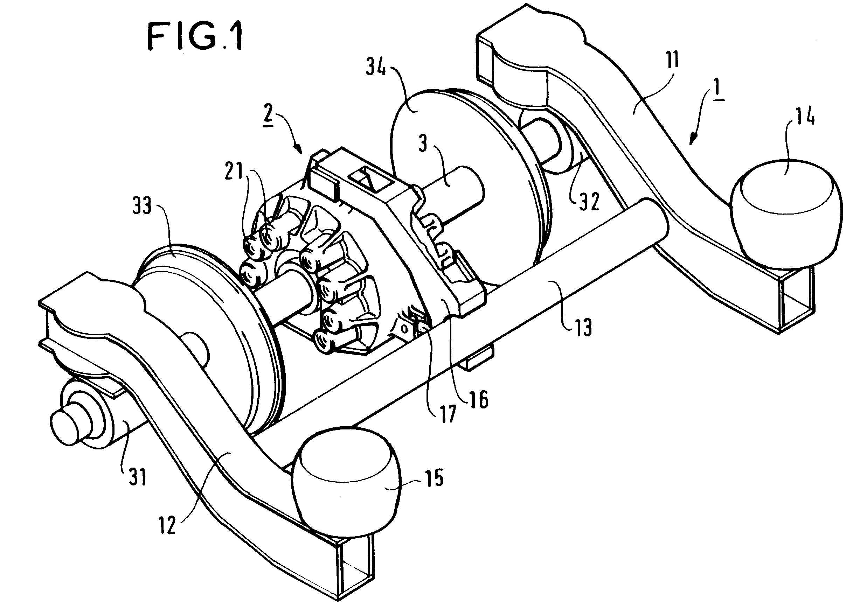

La figure 1 montre une extrémité d'un bogie 1 équipée d'un ensemble de freinage 2. Le bogie comporte deux longerons 11 et 12 reliés entre eux à l'extrémité représentée par une traverse 13. Les longerons supportent des plots de suspension secondaire 14 et 15 sur lesquels repose le véhicule ferroviaire. Ils s'appuient, à cette extrémité du bogie, sur les boîtes d'essieu 31 et 32 de l'essieu 3 par l'intermédiaire de plots de suspension primaire non représentés. On distingue aussi sur cette figure les roues 33 et 34 montées sur l'essieu 3.

L'ensemble de freinage 2 est articulé en sa partie supérieure pour autoriser les jeux et gauches de voies habituels des essieux ferroviaires. Il est suspendu à l'extrémité d'un bras 16 fixé à la traverse 13. L'ensemble de freinage est conçu pour admettre les débattements verticaux de la suspension primaire existant entre le châssis du bogie et les essieux. La reprise du couple de freinage est assurée par une bielle 17 fixée d'un côté au bogie et reliée de l'autre côté à l'ensemble de freinage par une rotule.

On distingue sur cette figure les logements 21 des actionneurs disposés en couronne de chaque côté de l'ensemble de freinage.

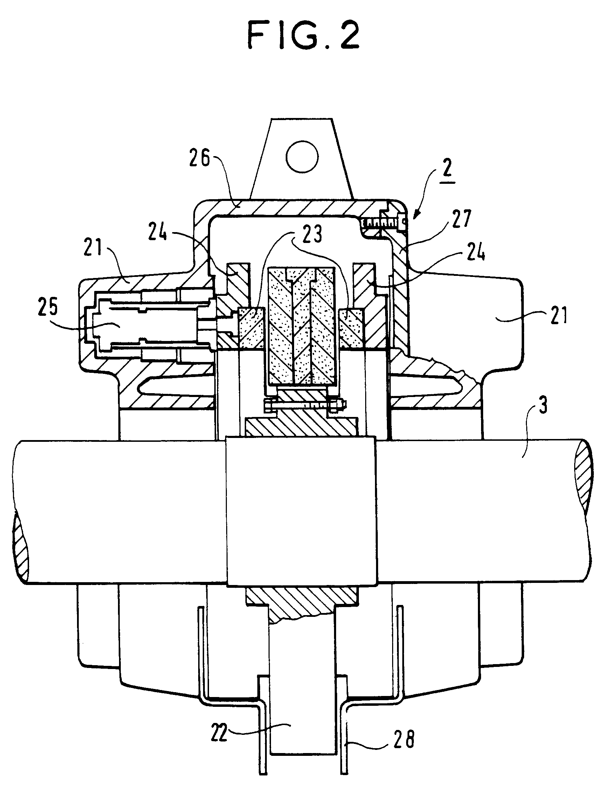

La figure 2 permet de voir l'intérieur de l'ensemble de freinage 2 dans une coupe verticale. L'organe dissipateur de l'énergie de freinage est constitué d'un disque-rotor de frottement 22 en matériau composite à base de carbone tel que le carbone/carbone par exemple. Il est calé sur l'essieu 3. Le freinage s'obtient par application de garnitures 23 sur le disque 22, ces garnitures pouvant être réalisées dans le même matériau que celui du disque 22 ou dans un matériau similaire. Les garnitures 23 sont montées sur des stators 24 dont le déplacement est commandé par les actionneurs 25 disposés dans les logements 21. Ces actionneurs sont avantageusement des vérins hydrauliques disposés en couronne.

Le carter de l'ensemble de freinage peut être constitué de deux parties 26 et 27 fixées l'une à l'autre par des vis selon un plan transversal à l'essieu. Un panier grillagé 28 fixé au carter assure, en partie inférieure une protection vis-à-vis de l'environnement.

Le disque-rotor de frottement peut être réalisé et mis en place sur l'essieu de différentes façons.

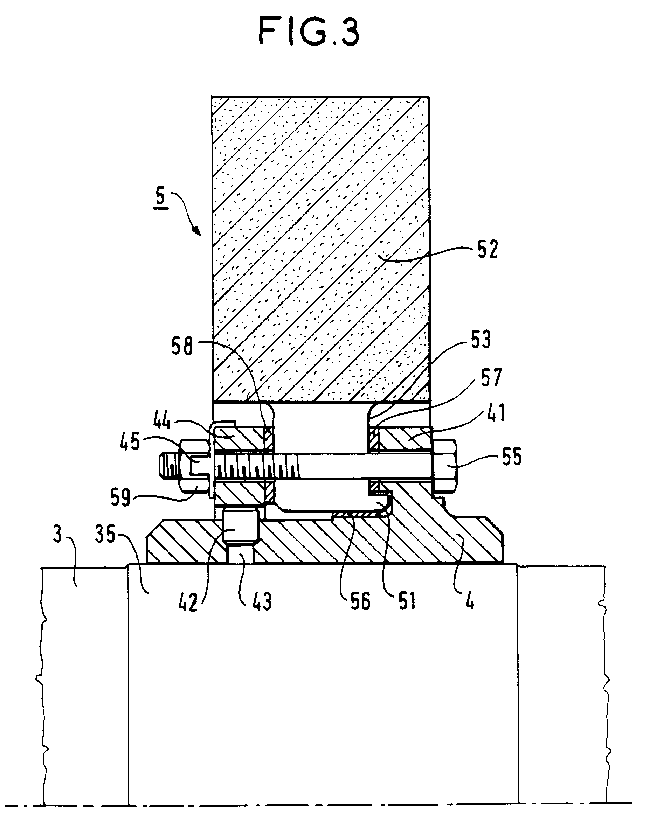

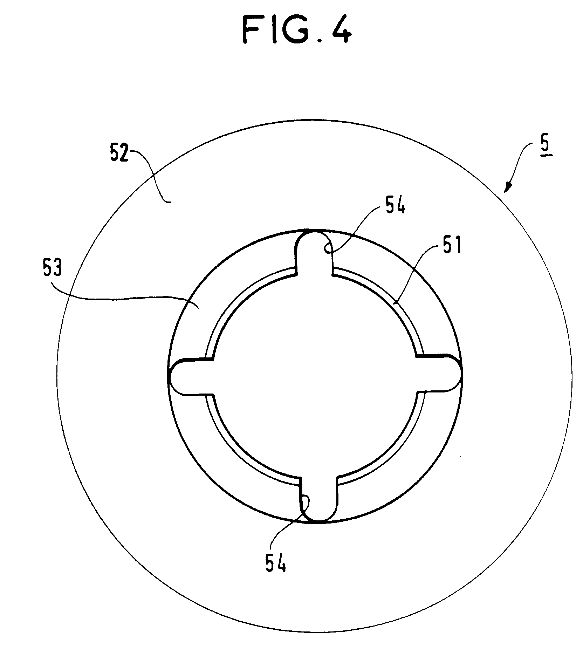

Les figures 3 et 4 illustrent une première variante de réalisation et d'installation d'un disque de frottement dans le cadre de l'invention. Un moyeu 4 est fritté sur la partie centrale 35 de l'essieu 3. Un disque 5 en matériau de frottement est rapporté sur le moyeu par un assemblage à talon 51. Le disque 5 comprend une couronne périphérique 52 offrant des faces de frottement pour le freinage. Il comprend également une partie annulaire intérieure 53 d'épaisseur plus faible que la couronne 52 et qui est pourvue du talon 51. La partie annulaire 53 est pourvue de quatre évidements 54 disposés régulièrement sur sa périphérie. Ces évidements peuvent être plus nombreux et sont destinés au passage de vis de fixation 55.

Le montage du disque 5 sur le moyeu 4 se fait de la manière suivante. On place d'abord la bague 56 sur le moyeu 4. On installe la rondelle 57 contre la butée axiale 41 du moyeu 4. Elle peut être maintenue en position par la présence des vis 55 traversant la butée 41. On fait glisser le disque 5 selon l'axe de l'essieu jusqu'à engagement du talon 51 sous la butée 41. On installe la rondelle 58 qui est aussi maintenue en position par les vis 55. On place ensuite un pied de centrage 42 dans un logement 43 prévu dans le moyeu 4, puis on installe la bague 44. Cette bague est immobilisée en rotation par le pied de centrage 42. La fixation de tous ces éléments est assurée par les vis 55, les écrous 59 et les freins d'écrou 45.

Entre la bague 56 et le disque 5 il existe un certain jeu radial, de même entre le talon 51 et la butée 41. Ces jeux permettent d'assurer le centrage du disque sur le moyeu: à froid sur le diamètre intérieur du disque et à chaud, après dilatation, sur le diamètre intérieur de la butée.

En choisissant convenablement le matériau de la bague 56 et des rondelles 57 et 58, on assure une bonne protection contre le cheminement du flux thermique vers le moyeu 4 et l'essieu 3. Les éléments 56, 57 et 58 peuvent avantageusement être réalisés en acier inoxydable.

Cette première solution présente l'avantage d'avoir un disque en matériau de frottement non directement solidaire de l'essieu. Ainsi les vibrations du disque issues du roulement sont amorties par le frottement du disque sur le moyeu d'une part et sur la bague 44 d'autre part.

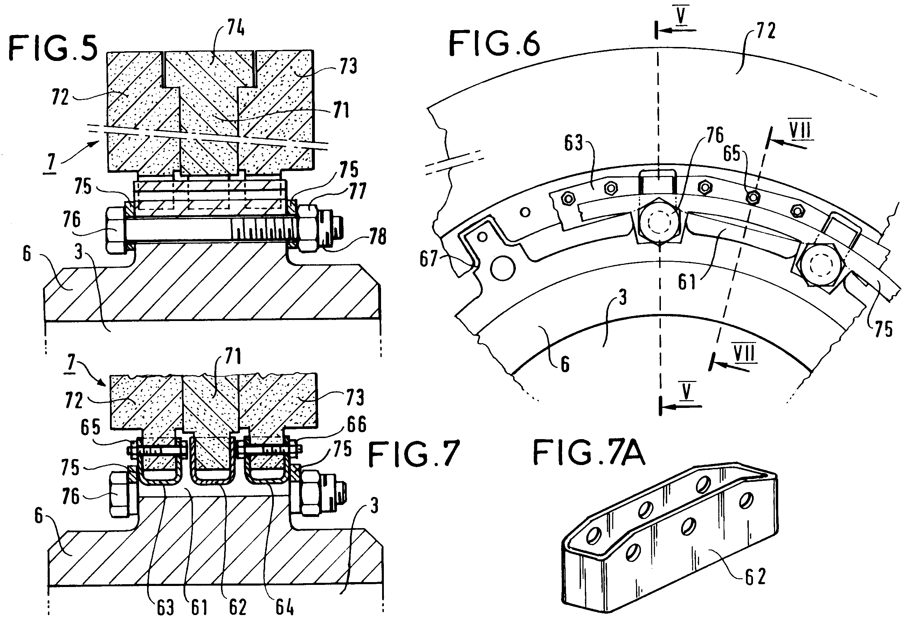

Les figures 5 à 7A illustrent une seconde variante de réalisation et d'installation d'un disque de frottement dans le cadre de l'invention. Un moyeu 6 est fritté sur l'essieu 3. Il possède des cannelures 61 réparties régulièrement sur sa périphérie et parallèles à l'axe de l'essieu. Ces cannelures permettant l'entraînement en rotation du disque de frottement 7. Le disque 7 est constitué de trois couronnes associées : une couronne centrale ou cale 71 comprise entre deux couronnes latérales 72 et 73 en matériau de frottement. La cale 71 peut également être réalisée dans le même matériau. Ces trois couronnes sont cannelées intérieurement. Les couronnes latérales sont préservées contre les effets de la force centrifuge par l'épaulement 74 de la cale et les formes complémentaires des couronnes latérales. Les couronnes 71, 72 et 73 sont maintenues transversalement par des secteurs d'arrêts 75 fixés au moyeu 6 par des boulons 76, des écrous 77 et des freins d'écrou 78 disposés régulièrement autour du moyeu.

Le montage du disque 7 sur le moyeu 6 se fait de la façon suivante. On place la cale 71 en position sur l'essieu 6, les cannelures de la cale 71 et de l'essieu étant faites de sorte qu'il y a emboitement d'une pièce dans l'autre. Avant de placer la cale sur l'essieu, chacune des dents séparant deux cannelures de la cale a été pourvue d'une cuvette 62 (voir la figure 7A) fixée à cette dent par des ensembles de boulons et d'écrous. On installe ensuite, de chaque côté de la cale 71, les couronnes 72 et 73 qui constitueront les secteurs de frottement. L'installation des couronnes 72 et 73 se fait de la même façon que pour la cale 71, en les pourvoyant de cuvettes 63 et 64 identiques à la cuvette représentée à la figure 7A. Sur la figure 7, on distingue bien les ensembles de boulons et d'écrous 65 et 66 retenant les cuvettes 63 et 64 sur les couronnes 72 et 73. Les ensembles de boulons et d'écrous retenant les cuvettes 62 sont disposés de manière alternée pour ne pas gêner les ensembles 65 et 66.

Les cuvettes 62, 63 et 64 permettent d'éviter le matage du matériau constituant les couronnes. Elles sont aussi destinées à former une barrière thermique de protection du moyeu et de l'essieu. On les choisira de préférence en acier inoxydable. Une meilleure isolation thermique est assurée en disposant les cuvettes non pas directement sur le fond des cannelures mais sur des rebords intermédiaires 67 (voir la figure 6).

Les secteurs d'arrêt 75 sont enfin montés et rendues solidaires de l'essieu par boulonnage.

Cette solution présente l'avantage d'une démontabilité aisée du matériau de frottement sans avoir à défretter le moyeu de l'essieu.

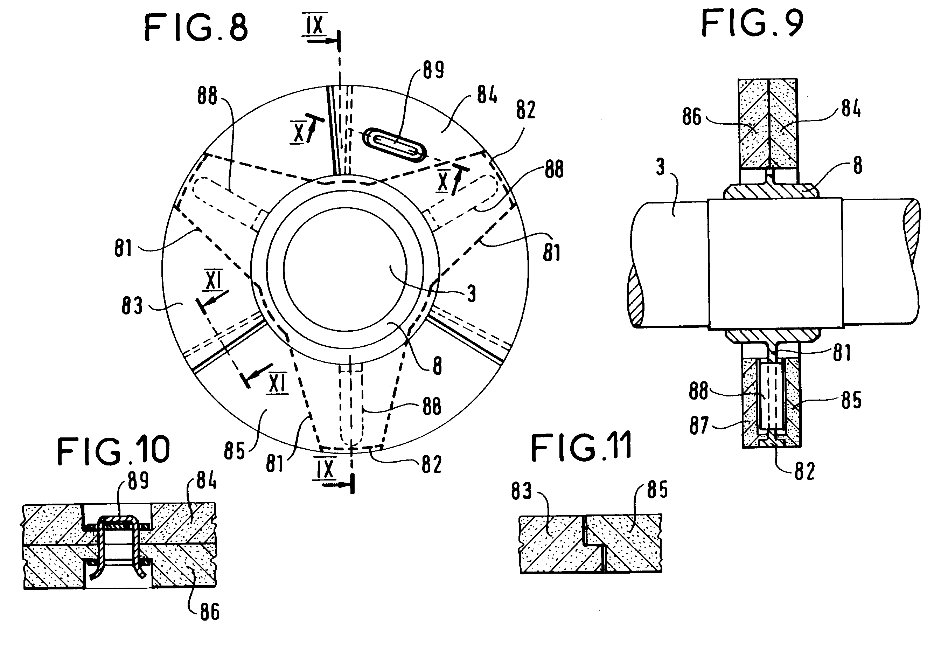

Les figures 8 à 11 illustrent une troisième variante de réalisation et d'installation d'un disque de frottement dans le cadre de l'invention. Un moyeu 8 est fritté sur l'essieu 3. Il est pourvu de trois bras 81 écartés de 120°. Chaque bras possède à son extrémité un épaulement 82 qui servira d'élément de retenue pour le matériau de frottement. Les bras sont de faible épaisseur par rapport à leur largeur comme on peut le voir sur les figures 8 et 9.

Le matériau de frottement est réparti en deux groupes de trois secteurs, chaque groupe étant disposé de part et d'autre du plan des bras du moyeu. La figure 8 montre un groupe de trois secteurs 83, 84 et 85. La figure 9 révèle encore deux autres secteurs 86 et 87. Les secteurs sont entraînés en rotation avec le moyeu par l'intermédiaire de clavettes 88 insérées dans chaque bras. Les secteurs en vis-à-vis sont maintenus entre eux par exemple par un système d'agrafes. Par souci de clarté, on n'a représenté qu'une seule agrafe 89 noyée dans la masse des secteurs 84 et 86. La figure 10 illustre la disposition d'une telle agrafe. A la place d'agrafes, on pourrait utiliser d'autres modes de fixation, par exemple un système d'axes clipsés.

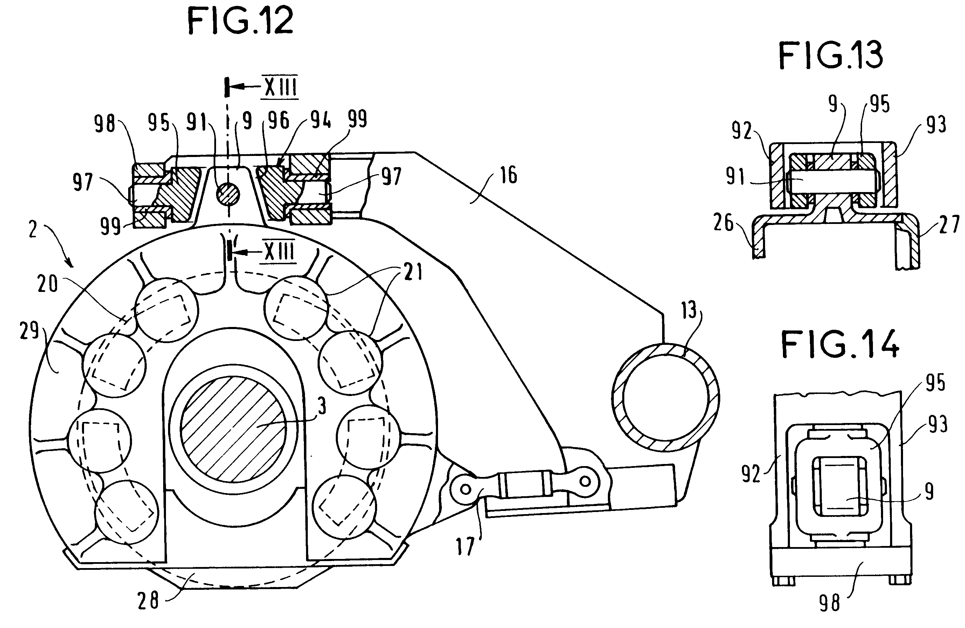

Comme le montre la figure 11, les secteurs adjacents d'un même groupe possèdent un décrochement permettant, lorsqu'ils sont aboutés, d'assurer une résistance transversale par appui facial.

Les secteurs sont protégés contre un arrachement dû à la force centrifuge par les épaulements 82 situés en extrémité des bras 81.

Cette variante de réalisation présente l'avantage d'une démontabilité aisée des matériaux de frottement sans avoir à défretter le moyeu de l'essieu. On remarque que les secteurs ne sont pas en contact avec la partie centrale du moyeu, diminuant ainsi la propagation de la chaleur vers l'essieu.

L'installation se fait de la manière suivante. On frette le moyeu sur l'essieu. On met en place les clavettes. On installe les différents secteurs et on les agrafe.

La figure 12 permet de mieux apprécier l'articulation de l'ensemble de freinage 2 sur le bras de suspension 16. Le carter 29 protège le disque-rotor d'une projection éventuelle de ballast et permet d'enfermer le volume compris entre rotor et stator, qui doit subir un échauffement important en cours de freinage, sans interdire une circulation d'air de ventilation entre le rotor et le stator.

On reconnaît sur la figure 12 les logements 21 des actionneurs. Comme on le verra par la suite, il est particulièrement avantageux d'utiliser comme actionneurs des vérins hydrauliques. Les vérins 25 (voir la figure 2) peuvent être selon la technique classique de cylindre hydraulique à rattrapage de jeu pour tenir compte de l'usure des garnitures et du disque-rotor. Le circuit hydraulique relie tous les cylindres entre eux ou un cylindre sur deux permettant dans ce dernier cas d'assurer soit une redondance, soit un complément d'effort le cas échéant.

Les garnitures 23 sont encastrées dans des supports ou stators 24 reliés aux pistons des vérins (voir la figure 2). Leur forme et leur nombre peuvent être adaptés au besoin. Sur la figure 12, on a représenté en traits interrompus des garnitures 20 dont la forme permet leur inscription permanente sur la surface du disque-rotor quels que soient les débattements de la suspension primaire du bogie.

L'ensemble de freinage 2 possède en partie haute un organe de suspension 9 dans lequel s'engage un axe 91 retenu par l'organe d'articulation 94 situé à l'extrémité du bras 16. Cet organe d'articulation est logé dans la fourche formée des deux dents 92 et 93 terminant le bras 16 (voir les figures 13 et 14). Il comprend un corps parallélépipédique 95 Percé d'un trou vertical 96 permettant le logement de l'organe de suspension 9 et de deux trous horizontaux de réception de l'axe 91. L'organe d'articulation 94 comprend encore deux tourillons 97 prolongeant le corps 95 vers l'avant et vers l'arrière. L'un de ces tourillons se loge dans la partie du bras 16 réunissant les dents 92 et 93. L'autre tourillon se loge dans un trou d'une pièce 98 de fermeture de la fourche. Des bagues 99 permettant une rotation, sans frottement des tourillons 97.

L'ensemble de freinage 2 dispose donc d'une liberté en rotation sur les deux tourillons 97 pour accepter les gauches de voie entraînant une inclinaison de l'essieu. Dans le sens transversal, une autre liberté est donnée autour de l'axe 91. La bielle de rappel 17 peut être remplacée par un capteur pouvant donner l'image de l'effort de retenue engendré pendant le freinage.

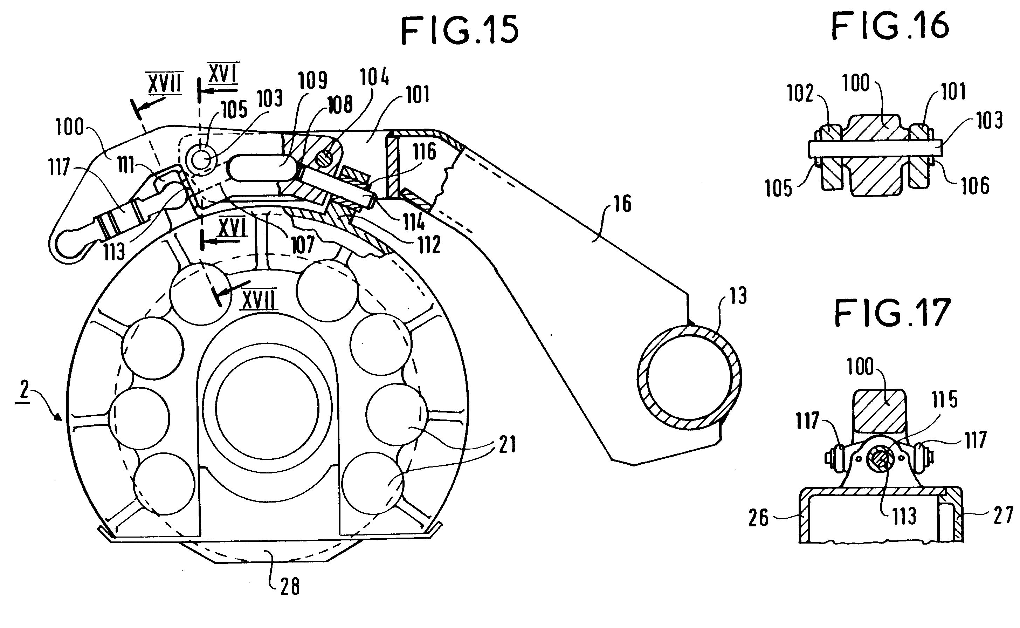

Les figures 15 à 17 illustrent une autre variante de l'accrochage de l'ensemble de freinage 2. Le bras de suspension 16 se termine par une fourche à deux dents 101 et 102. La fourche supporte un organe d'articulation 100 rendu solidaire du bras de suspension 16 par deux axes transversaux 103 et 104 immmobilisés par des éléments de blocage tels ceux référencés 105 et 106. L'organe d'articulation 100 est pourvu de deux trous 107 et 108 percés obliquement et débouchant dans une lumière 109.

L'ensemble de freinage 2 possède en partie haute, de part et d'autre de la verticale, deux organes de suspension 111 et 112, chacun étant percé d'un trou dans l'alignement des trous 107 et 108. L'ensemble de freinage est relié à l'organe d'articulation par deux axes 113 et 114 montés serrés dans les trous 107 et 108. Ces axes traversent les trous des organes de suspension 111 et 112. Des supports élastiques 115 et 116 du type silentbloc sont placés dans les trous des organes de suspension et autour des axes 113 et 114. Ces supports élastiques permettent, par écrasement, de légers déplacements de l'ensemble de freinage.

Un capteur d'effort 117 est disposé entre l'extrémité libre de l'organe d'articulation 100 et l'organe de suspension 111. Il permet de donner une image du couple de torsion engendré pendant le freinage dans l'ensemble de freinage.

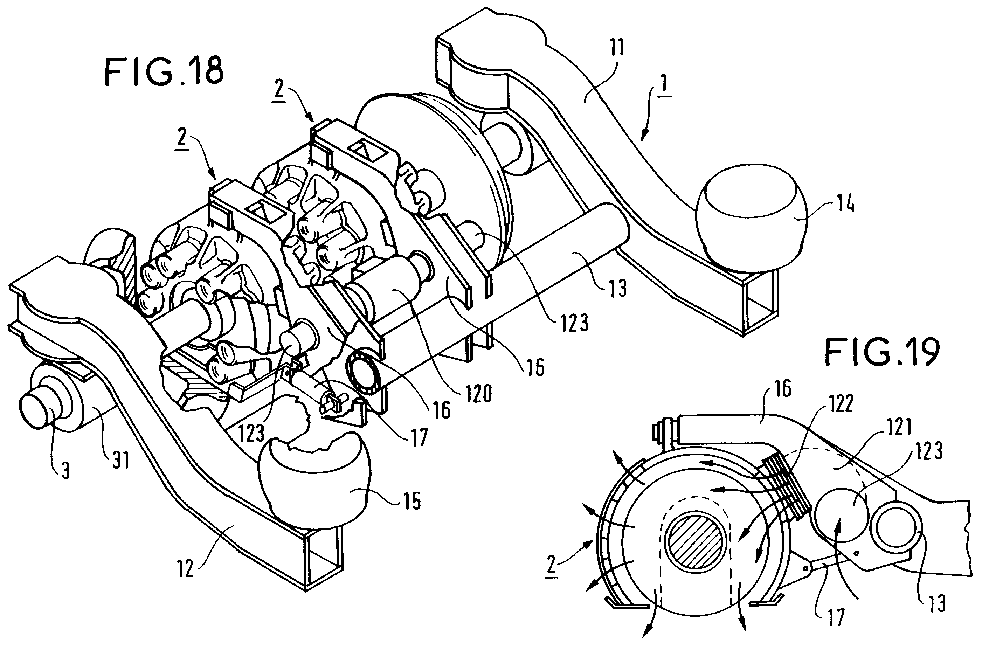

La figure 18 montre un exemple de disposition de deux ensembles de freinage selon l'invention, montés sur le même essieu 3. Pour permettre une meilleure évacuation des calories engendrées pendant un freinage, un système de moto-ventilation 120 est monté sur les bras de suspension 16 qui font office de volute.

La figure 19 illustre la ventilation d'un ensemble de freinage. La volute a été désignée sous la référence 121. Un soufflet 122 prolonge la volute 121 et permet d'envoyer de l'air aspiré au travers des filtres 123 directement sur la périphérie des disques de frottement et au contact des garnitures.

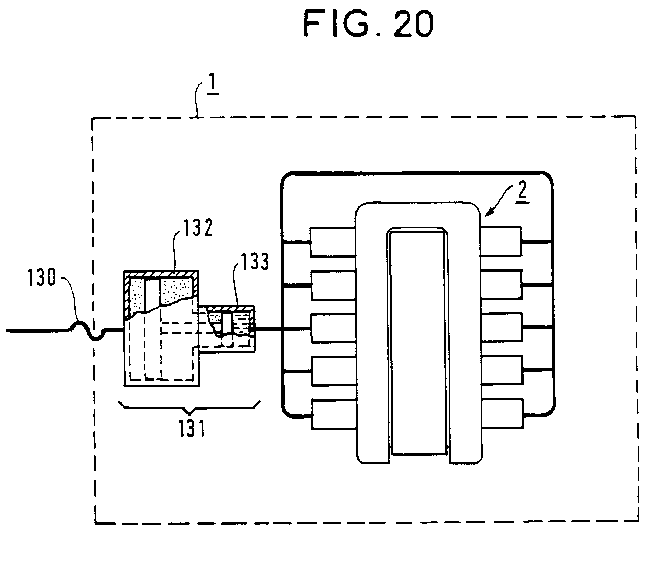

Il est particulièrement avantageux d'utiliser une pression hydraulique pour le fonctionnement des actionneurs. Ceci est illustré par la figure 20. Le circuit pneumatique de freinage, tel qu'il a été décrit plus haut, peut rester inchangé jusqu'au flexible de liaison caisse-bogie 130. Le flexible 130 est relié à un maître cylindre 131. La pression pneumatique se manifestant dans le cylindre 132 est transformée en une pression hydraulique dans le cylindre 133. La pression hydraulique est alors distribuée aux actionneurs de l'ensemble de freinage 2.

La commande pneumatique du freinage reste donc inchangée par rapport aux systèmes classiques éprouvés et l'anti-enrayage peut avoir la même logique.

L'information provenant des capteurs d'effort peut être traitée électriquement sur la commande du frein ou pneumatiquement au niveau du relais de débit. Si l'information est électrique au niveau du capteur, elle peut être transformée au niveau d'un transducteur (le maître cylindre 131) en une pression pneumatique de pilotage du relais.

Le passage de la pression pneumatique en pression hydraulique se traduit par une augmentation importante de la pression avec laquelle les garnitures sont appliquées sur le disque-rotor. Sous régime pneumatique, la pression distribuée aux actionneurs est de l'ordre de 6 à 8 bars. Le passage en régime hydrauliques conduit à distribuer aux actionneurs une pression de l'ordre de 150 bars. On résoud ainsi le problème de la dispersion du coefficient de frottement du matériau à base de carbone, coefficient qui varie fortement en fonction des conditions climatiques et de la température. En utilisant des pressions importantes, le coefficient de frottement reste beaucoup plus stable.

La possibilité d'utiliser une pression hydraulique est due au fait que les ensembles de freinage sont suspendus au châssis du bogie. Ceci permet de réduire l'amplitude des vibrations par rapport à l'essieu et on évite ainsi les fuites de joints.

## Revendications

1. Système de freinage (2) pour véhicule ferroviaire monté sur un essieu (3) dudit véhicule, ledit ensemble comportant un disque de frottement (22) et des garnitures (23), le disque de frottement étant calé sur l'essieu, les garnitures étant disposées sur des stators (24) logés dans des éléments (26, 27) encadrant le disque, lesdits éléments étant soutenus par ledit véhicule ou le bogie (1) correspondant à l'essieu, les stators des garnitures étant actionnés par des actionneurs (25), au moins ledit disque de frottement étant réalisé en matériau composite à base de carbone, caractérisé en ce que:
- lesdits éléments sont soutenus par ledit véhicule ou ledit bogie par l'intermédiaire d'un organe d'articulation (94) autorisant une première liberté en rotation pour accepter les jeux et les gauches de voie entraînant une inclinaison de l'essieu et une seconde liberté dans le sens transversal,
- un organe de rappel (17) relie lesdits éléments audit véhicule ou audit bogie.

2. Système de freinage selon la revendication 1, caractérisé en ce que le disque de frottement est rendu solidaire de l'essieu par des moyens de fixation facilitant son démontage.

3. Système de freinage selon la revendication 2, caractérisé en ce que les moyens de fixation du disque de frottement comprennent un moyeu (4, 6, 8) calé sur l'essieu (3) et recevant le disque de frottement formé d'une ou de plusieurs parties.

4. Système de freinage selon l'une quelconque des revendications 1 à 3, caractérisé en ce qu'il comporte des moyens de prévention de la propagation vers l'essieu de l'énergie thermique engendrée dans le disque de frottement lors du freinage.

5. Système de freinage selon la revendication 4, caractérisé en ce que lesdits moyens de prévention comporte l'interposition d'un isolant thermique (56, 57, 58) entre le disque de frottement et l'essieu.

6. Système de freinage selon la revendication 4, caractérisé en ce que lesdits moyens de prévention comprennent une couche d'air entre le disque de frottement et l'essieu.

7. Système de freinage selon l'une quelconque des revendications 1 à 6, caractérisé en ce que les éléments (26, 27) encadrant le disque de frottement forment un carter (29).

8. Système de freinage selon l'une quelconque des revendications 1 à 7, caractérisé en ce que l'ensemble de freinage comporte un élément ajouré (28) assurant une protection vis-à-vis de l'environnement.

9. Système de freinage selon l'une quelconque des revendications 1 à 8, caractérisé en ce que les actionneurs (25) sont disposés en couronne dans les éléments encadrant le disque de frottement.

10. Système de freinage selon l'une quelconque des revendications 1 à 9, caractérisé en ce que les actionneurs (25) sont répartis en plusieurs groupes pouvant être commandés séparément.

11. Système de freinage selon l'une quelconque des revendications 1 à 10, caractérisé en ce qu'il comprend une bielle articulée (17) reliant le véhicule ou le bogie (1) à l'ensemble de freinage (2) et permettant une reprise de l'effort de freinage.

12. Système de freinage selon l'une quelconque des revendications 1 à 10, caractérisé en ce qu'il comprend un capteur d'effort (117) reliant le véhicule ou le bogie à l'ensemble de freinage (2) et délivrant un signal représentatif de l'effort de freinage.

13. Système de freinage selon l'une quelconque des revendications 1 à 12, caractérisé en ce que, le système comprenant un circuit pneumatique de commande de freinage , il est prévu un transducteur (131) transformant la pressiion pneumatique du circuit de commande de freinage en pression hydraulique pour assurer le fonctionnement des actionneurs.

14. Système de freinage selon l'une quelconque des revendications 1 à 13, caractérisé en ce que l'articulation soutenant l'ensemble de freinage est disposée à l'extrémité d'un bras de suspension (16) solidaire du véhicule ou du bogie.

15. Système de freinage selon l'une quelconque des revendications précédentes, caractérisé en ce qu'il comporte un organe de ventilation (120) soufflant à l'intérieur de l'ensemble de freinage (2).

16. Système de freinage selon les revendications 14 et 15 prises ensemble, caractérisé en ce que le bras de suspension (16) fait office de conduit de ventilation entre l'organe de ventilation et l'ensemble de freinage.

## Claims

1. A braking system (2) for a rail vehicle mounted on an axle (3) of said vehicle, said system including a friction disk (22) and pads (23), the friction disk being keyed to the axle, the pads being disposed on stators (24) housed in elements (26, 27) flanking the disk, said elements being supported by said vehicle or the bogie (1) corresponding to the axle, the stators for the pads being actuated by actuators (25), at least said friction disk being made of a composite material based on carbon, said braking system being characterized in that:
- said elements are supported by said vehicle or by said bogie via a hinge member (94) allowing first rolling freedom so as to accommodate track distortion and play that cause the axle to slope, and second rolling freedom in the transverse direction; and
- a return member (17) connects said elements to said vehicle or to said bogie.

2. A braking system according to claim 1, characterized in that the friction disk is secured to the axle by fixing means that facilitate removing it.

3. A braking system according to claim 2, characterized in that the fixing means for fixing the friction disk comprise a hub (4, 6, 8) keyed to the axle (3) and receiving the friction disk which is formed of one or more portions.

4. A braking system according to an one of claims 1 to 3, characterized in that it includes prevention means for preventing the heat energy generated in the friction disk on braking from propagating towards the axle.

5. A braking system according to claim 4, characterized in that said prevention means comprise a thermal insulator (56, 57, 58) interposed between the friction disk and the axle.

6. A braking system according to claim 4, characterized in that said prevention means comprise a layer of air between the friction disk and the axle.

7. A braking system according to any one of claims 1 to 6, characterized in that the elements (26, 27) flanking the friction disk form a casing (29).

8. A braking system according to any one of claims 1 to 7, characterized in that the braking assembly includes a perforated element (28) providing protection from the environment.

9. A braking system according to any one of claims 1 to 8, characterized in that the actuators (25) are disposed in a ring layout in the elements flanking the friction disk.

10. A braking system according to any one of claims 1 to 9, characterized in that the actuators (25) are distributed in a plurality of groups that can be controlled separately.

11. A braking system according to any one of claims 1 to 10, characterized in that it includes a hinged link (17) connecting the vehicle or the bogie (1) to the braking assembly (2) and enabling the braking force to be taken up.

12. A braking system according to any one of claims 1 to 10, characterized in that it includes a force sensor (117) connecting the vehicle or the bogie to the braking assembly (2) and delivering a signal that represents the braking force.

13. A braking system according to any one of claims 1 to 12, characterized in that, with the system including a braking control circuit that is pneumatic, a transducer (131) is provided that transforms the pneumatic pressure of the braking control circuit into hydraulic pressure so as to operate the actuators.

14. A braking system according to any one of claims 1 to 13, characterized in that the hinge supporting the braking assembly is disposed at the end of a suspension arm (16) that is secured to the vehicle or to the bogie.

15. A braking system according to any preceding claim, characterized in that it includes a ventilation member (120) blowing into the braking assembly (2).

16. A braking system according to claim 14 and claim 15 together, characterized in that the suspension arm (16) serves as a ventilation duct between the ventilation member and the braking assembly.

## Patentansprüche

1. Bremsvorrichtung (2) für Schienenfahrzeuge, die an einer Achse (3) des Fahrzeugs angebracht ist, wobei der Aufbau eine Reibscheibe (22) und Beläge (23) aufweist, wobei die Reibscheibe an der Achse fest ist, die Beläge auf Statoren (24) angeordnet sind, die in Elementen (26, 27) gelagert sind, die die Scheibe einrahmen, wobei die Elemente vom Fahrzeug oder dem Fahrgestell (1) entsprechend an der Achse gehalten werden, wobei die Statoren der Beläge durch Betätigungsgeräte (25) betätigt werden, wobei wenigstens die Reibscheibe in einem Kohlenstoff enthaltendem Verbundwerkstoff ausgeführt ist, **dadurch gekennzeichnet**, daß:
- die Elemente von dem Fahrzeug oder
- dem Fahrgestell mittels eines Gelenkelements (94) gehalten werden, das eine erste Freiheit zur Drehung, um die Spielräume und die Gleisverwerfungen aufzunehmen, die eine Neigung der Achse bewirken, und eine zweite Freiheit in der transversalen Richtung zuläßt,
- ein Rückstellelement (17) die Elemente mit dem Fahrzeug oder dem Fahrgestell verbinden.

2. Bremsvorrichtung nach Anspruch 1, dadurch gekennzeichnet, daß die Reibscheibe mit der Achse durch Befestigungsmittel fest verbunden ist, die ihre Demontage erleichtern.

3. Bremsvorrichtung nach Anspruch 2, dadurch gekennzeichnet, daß die Befestigungsmittel der Reibscheibe eine Nabe (4, 6, 8) aufweisen, die an der Achse (3) fest ist und die aus einem oder mehreren Teilen gebildete Reibscheibe aufnimmt.

4. Bremsvorrichtung nach einem der Ansprüche 1 bis 3, dadurch gekennzeichnet, daß sie Mittel zum Verhindern der Ausbreitung der beim Bremsen in der Reibscheibe erzeugten Wärmeenergie zur Achse hin aufweist.

5. Bremsvorrichtung nach Anspruch 4, dadurch gekennzeichnet, daß die Verhinderungsmittel die Einfügung eines Wärmeisolationsmaterials (56, 57, 58) zwischen der Reibscheibe und der Achse aufweisen.

6. Bremsvorrichtung nach Anspruch 4, dadurch gekennzeichnet, daß die Verhinderungsmittel eine Luftschicht zwischen der Reibscheibe und der Achse umfassen.

7. Bremsvorrichtung nach einem der Ansprüche 1 bis 6, dadurch gekennzeichnet, daß die Elemente (26, 27), die die Reibscheibe einrahmen, ein Gehäuse (29) bilden.

8. Bremsvorrichtung nach einem der Ansprüche 1 bis 7, dadurch gekennzeichnet, daß der Bremsaufbau ein durchbrochenes Element (28) aufweist, das einen Schutz gegenüber der Umgebung sicherstellt.

9. Bremsvorrichtung nach einem der Ansprüche 1 bis 8, dadurch gekennzeichnet, daß die Betätigungsgeräte (25) in einem Kranz in den Elementen angeordnet sind, die die Reibscheibe einrahmen.

10. Bremsvorrichtung nach einem der Ansprüche 1 bis 9, dadurch gekennzeichnet, daß die Betätigungsgeräte (25) in mehrere Gruppen verteilt sind, die getrennt gesteuert werden können.

11. Bremsvorrichtung nach einem der Ansprüche 1 bis 10, dadurch gekennzeichnet, daß sie ein gelenkig angebrachtes Glied (17) umfaßt, das das Fahrzeug oder das Fahrgestell (1) mit dem Bremsaufbau (2) verbindet und ein schnelles Hochfahren der Bremskraft gestattet.

12. Bremsvorrichtung nach einem der Ansprüche 1 bis 10, dadurch gekennzeichnet, daß sie einen Kraftsensor (117) umfaßt, der das Fahrzeug oder das Fahrgestell mit dem Bremsaufbau (2) verbindet und ein die Bremskraft darstellendes Signal liefert.

13. Bremsvorrichtung nach einem der Ansprüche 1 bis 12, dadurch gekennzeichnet, daß wenn die Vorrichtung einen pneumatischen Kreis zur Bremssteuerung umfaßt, ein Transducer (131) vorgesehen ist, der den pneumatischen Druck des Kreises zur Bremssteuerung in einen hydraulischen Druck umwandelt, um die Funktion der Betätigungsgeräte sicherzustellen.

14. Bremsvorrichtung nach einem der Ansprüche 1 bis 13, dadurch gekennzeichnet, daß das Gelenk, das den Bremsaufbau hält, am Ende eines Aufhängungsarmes (16) angeordnet ist, der mit dem Fahrzeug oder dem Fahrgestell fest verbunden ist.

15. Bremsvorrichtung nach einem der vorhergehenden Ansprüche, dadurch gekennzeichnet, daß sie ein Lüftungselement (120) aufweist, das in das Innere des Bremsaufbaus (2) bläst.

16. Bremsvorrichtung nach den Ansprüchen 14 und 15 in Kombination, dadurch gekennzeichnet, daß der Aufhängungsarm (16) als Lüftungskanal zwischen dem Lüftungselement und dem Bremsaufbau dient.
